# EUROPÄISCHE PATENTSCHRIFT

(11) **EP 1 800 922 B1**
(45) Veröffentlichungstag und Bekanntmachung des Hinweises auf die Patenterteilung: **12.01.2011**
(21) Anmeldenummer: 06025201.2
(22) Anmeldetag: 06.12.2006
(51) Int. Cl.: B60J 1/20

(54) **Rollo zur Vollbeschattung einer Heckscheibe**
Roller blind for completely obscuring a vehicle rear window
Store à enrouler pour ombrage total d'une vitre arrière

(30) Priorität: 23.12.2005 DE 102005062427
(43) Veröffentlichungstag der Anmeldung: 27.06.2007
(73) Patentinhaber: BOS GmbH & Co. KG, 73760 Ostfildern (DE)
(72) Erfinder: Walter, Herbert, 73061 Ebersbach (DE); Schlecht, Werner P., 71665 Vaihingen/Enz Aurich (DE)
(74) Vertreter: Rüger, Barthelt & Abel Patentanwälte

(56) Entgegenhaltungen:
- EP-A- 0 834 414
- EP-A1- 1 188 591
- DE-A1- 10 019 787
- DE-A1- 10 040 624
- DE-B3-102004 020 531
- US-A- 6 086 133

## Beschreibung

Aus dem Stand der Technik sind eine Vielzahl von Rolloanordnungen bekannt, die dazu eingerichtet sind, eine Heckscheibe zu beschatten. Bei den modernen Karosserieformen ist die Kraftfahrzeugbreite im Bereich der Dachoberkante des Heckfenster deutlich kleiner als auf der Höhe der Gürtellinie. Zufolge dieser Geometrie hat das Heckfenster eine angenähert trapezförmige Gestalt. Die Führungsschienen sind bei den neuesten Lösungen in den Innenverkleidungen der an das Heckfenster angrenzenden Karosseriesäulen integriert.

Die Rollobahn ist an die trapezförmige Gestalt des Heckfensters angepasst, und zwar so, dass sie an keiner Stelle mit der Innenverkleidung kollidiert. Zufolge dieser Anordnung besteht in der Regel zwischen der Seitenkante der Rollobahn und der Innenverkleidung beziehungsweise der Fensterseitenkante ein Lichtspalt, der gelegentlich als ästhetisch störend empfunden wird.

Aus der EP 0 834 414 A2 ist eine Rolloanordnung für Kraftfahrzeugfenster bekannt. Die Rolloanordnung weist eine drehbar gelagerte Rollowelle auf, die neben der Oberkante des Kraftfahrzeugfensters angeordnet ist. An der Rollobahn ist ein Auszugsprofil befestigt, das endseitig in zwei zueinander parallelen Führungsschienen verschieblich geführt ist, die neben den Seitenkanten des Kraftfahrzeugfensters verlaufen. Die Rollobahn ist mit ihrer anderen Kante an der Wickelwelle verankert, die zu dem Auszugsprofil etwa parallel verläuft.

Die Rollobahn hat eine Breite, gemessen parallel zu der Wickelwelle, so dass die Rollobahn mit ihren Längskanten bis in die Führungsschienen hineinreicht. Das Fenster kann auf diese Weise mittels des Rollos spaltfrei verschlossen werden.

Ausgehend hiervon ist es Aufgabe der Erfindung, ein Heckfensterrollo für Kraftfahrzeuge zu schaffen, bei dem der seitliche Spalt unabhängig von der Geometrie des Fensters vermieden ist.

Diese Aufgabe wird erfindungsgemäß durch die Rolloanordnung mit den Merkmalen des Anspruches 1 gelöst.

Bei der neuen Rolloanordnung für Kraftfahrzeugfenster, insbesondere Heckfenster, ist eine drehbar gelagerte Rollowelle vorgesehen. Die Rollowelle ist neben einer Kante des Kraftfahrzeugfensters angeordnet, vorzugsweise neben der Unterkante.

An der anderen Kante ist ein Auszugsprofil verankert, das endseitig in zwei Führungsschienen geführt ist. Die beiden Führungsschienen verlaufen parallel zu den Seitenkanten der Heckscheibe.

Die Rollobahn hat einen rechteckigen Zuschnitt und ragt seitlich über das Auszugsprofil über. Der überstehende Teil des Auszugsprofils verschwindet in einem Aufnahmeraum neben der Führungsschiene. Dadurch ist in jeder Stellung der Rollobahn die Heckscheibe von Seitenkante zu Seitenkante durch die Rollobahn abgedeckt.

Vorteilhaft ist es, wenn neben den Führungsschienen zusätzlich Aufnahmeräume vorgesehen sind, in denen der überstehende Teil der Rollobahn aufgenommen wird.

Je nach Gestaltung kann in jeder Stellung der Rollobahn jeweils ein Teil des Rollos in dem Aufnahmeraum enthalten sein oder aber während der Bewegung der Rollobahn schiebt sich zunehmend Seitenrandbereich der Rollobahn in den Aufnahmeraum vor.

Die erfindungsgemäße Anordnung ist nicht nur bei Fenstern verwendbar, bei denen die Seitenkanten in Richtung auf die Oberkante konvergieren. Sie ist auch verwendbar bei Fenstern die im wesentlichen rechteckig sind, womit über den gesamten Laufweg der Rollobahn zwischen der eingezogenen und ausgefahrenen Stellung immer Seitenrandbereich der Rollobahn in den Aufnahmetaschen enthalten sind.

Insbesondere von dem Innenraum des Kraftfahrzeugs her ergibt sich ein sehr geschlossener Anblick, wenn die Aufnahmeräume für den seitlichen Überstand der Rollobahn von oben oder der Außenseite gesehen unterhalb/hinter der/den Führungsschienen angeordnet sind. Bei der Sicht von innen nach außen sind dadurch die Führungsschienen durch die Rollobahn verdeckt und es ergibt sich ein besonders glatter, ästhetischer Übergang von der Rollobahn zur Seitenverkleidung der C-Säulen bei einer viertürigen Limousine.

Wenn das Heckfenster eine trapezförmige Gestalt hat, ändert sich die Tiefe der Aufnahmeräume zweckmäßigerweise in Ausfahrrichtung gesehen, um den entsprechend größer werdenden Überstand aufnehmen zu können.

Die Aufnahmeräume müssen nicht notwendigerweise unmittelbar bis an die Wickelwelle herangeführt sein. Es genügt, wenn diese Aufnahmeräume in einem genügend dichten Abstand neben der Wickelwelle, jedoch noch unterhalb der Hutablage beginnen, damit das Einlaufen der Rollobahn unterhalb der Hutablage beginnt.

Damit das Einlaufen der Rollobahn in die Aufnahmeräume problemlos vonstatten geht, kann der Aufnahmeraum auf der betreffenden Seite, die der Einlauföffnung entspricht, eine Umlenkkante aufweisen, während auf der gegenüberliegenden Seite eine Anschlag- oder Gleitfläche vorgesehen ist.

Diese Anschlag- oder Begrenzungsfläche liegt zweckmäßigerweise parallel zu der benachbarten Seitenwand des Kraftfahrzeugs und somit zwischen der Innenverkleidung und der Roh-Karosserie.

Das Auszugsprofil der Rollobahn ist zweckmäßigerweise mit einer Versteifung versehen, derart, dass die Kante in Richtung parallel zu dem Bewegungshub der Rollobahn biegesteif ist, quer dazu jedoch biegeelastisch. Dadurch wird die Kraft, die von dem Auszugsprofil in die Rollobahn eingeleitet wird, auch auf den Teil der Rollobahn übertragen, der nicht mehr unmittelbar an dem Auszugsprofil gefesselt ist, weil er über dieses seitlich übersteht.

Diese biegesteife Anordnung wird im einfachsten Falle erhalten, indem dort mit der Rollobahnkante ein Blattfederstück verbunden ist.

Die Montageverhältnisse werden besonders einfach, wenn die betreffende Kante der Rollobahn durchgehend mit einer schlauchförmigen Schlaufe oder einem Umbug versehen ist, in dem ein Blattfederstreifen eingelegt ist.

Bei dem erfindungsgemäßen Rollo kann der Antrieb in der für solche Rollos üblichen Weise erfolgen. Das Bewegen des Auszugsprofils geschieht beispielsweise mit Antriebsgliedern/-kabeln, die in den Führungsschienen ausknicksicher geführt sind. Die Antriebsglieder sind mit einer Linearantriebseinrichtung verbunden, die im einfachsten Falle bowdenzugartig ausgeführt ist und beispielsweise aus einem linearen Antriebsglied mit umlaufender Verzahnung besteht. Diese Verzahnung kämmt mit einem auf einer Ausgangswelle eines Getriebemotors sitzenden Ritzels entsprechend der Teilung.

Das Aufrollen der Rollobahn auf der Wickelwelle kann mit Hilfe eines Federmotors bewerkstelligt werden, der die Wickelwelle im Sinne des Aufwickelns der Rollobahn unter Vorspannung setzt.

Im übrigen sind Weiterbildungen der Erfindung Gegenstand von Unteransprüchen.

Bei der Durchsicht der Figurenbeschreibung wird klar, dass hier lediglich ein bevorzugtes Ausführungsbeispiel beschrieben ist, das in vielfältiger Weise abgewandelt werden kann und bei dem auch Einzelteile modifiziert oder weggelassen werden können, soweit im weitesten Sinne die oben angegebene Aufgabe noch gelöst wird.

In der Zeichnung ist ein Ausführungsbeispiel des Gegenstandes der Erfindung dargestellt. Es zeigen:
- Fig. 1: einen Ausschnitt aus der Heckpartie eines Kraft- fahrzeugs in perspektivischer Darstellung mit eingefahrenem Heckscheibenrollo
- Fig. 2: den prinzipiellen Aufbau des Heckscheibenrollos aus dem Fahrzeug nach Fig. 1 und
- Fig. 3: eine vergrößerte Ausschnittsdarstellung unter Veranschaulichung des Eintauchens des Rollobahn- randes in eine zugehörige Aufnahmetasche, in per- spektivischer Darstellung.

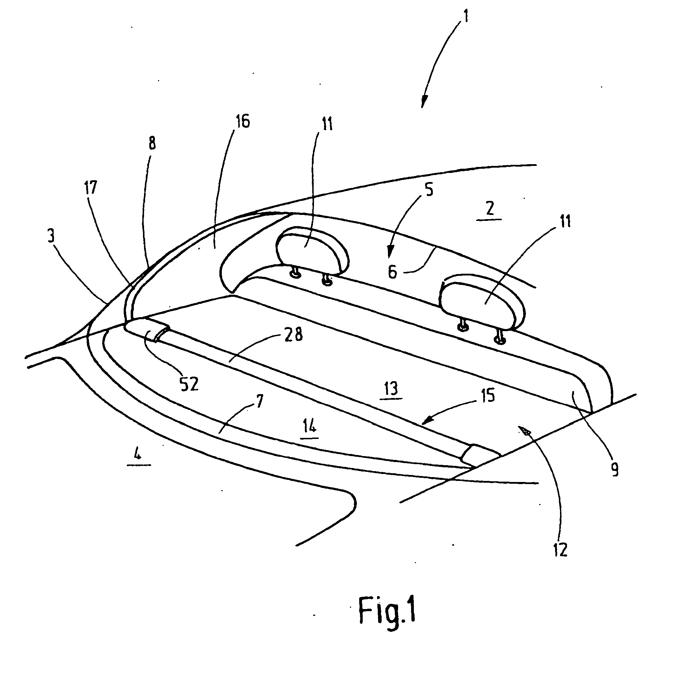

Fig. 1 veranschaulicht einen Blick auf einen Ausschnitt der Heckpartie eines Kraftfahrzeugs 1. Zu erkennen ist ein Dach 2, eine linke C-Säule 3 sowie ein Kofferraumdeckel 4. Die mit der linken C-Säule 3 korrespondierende rechte C-Säule ist weggeschnitten und somit nicht erkennbar.

Oberhalb der Kofferklappe 4 enthält das Fahrzeug ein Heckfenster 5, das von einer Oberkante 6, einer Unterkante 7 sowie zwei Seitenkanten begrenzt ist, von denen wegen der abgeschnittenen Darstellung lediglich die Seitenkante 8 als Bestandteil der C-Säule 3 veranschaulicht ist.

Im Inneren des Kraftfahrzeugs 1 ist eine Rücksitzlehne 9 mit darauf stehenden Kopfstützen 11 zu erkennen. Zwischen der Rückseite der Rücklehne 9 und der Unterkante 7 erstreckt sich eine Hutablage 12, die durch einen Auszugsschlitz in zwei Abschnitte 13 und 14 aufgeteilt ist. Der Schlitz, der sich über die gesamte Breite der Hutablage 12 erstreckt, ist in der dargestellten Form von einem Auszugsprofil 15 verdeckt.

Ferner ist auf der Innenseite der C-Säule 3 eine Innenverkleidung 16 zu sehen, die einen Schlitz 17 enthält, der bei dem Schlitz in der Hutablage 12 beginnt, von dort aus sich an die Seitenkante 3 annähert und im übrigen dem Verlauf der Seitenkante 3 bis zu der Oberkante 6 folgt.

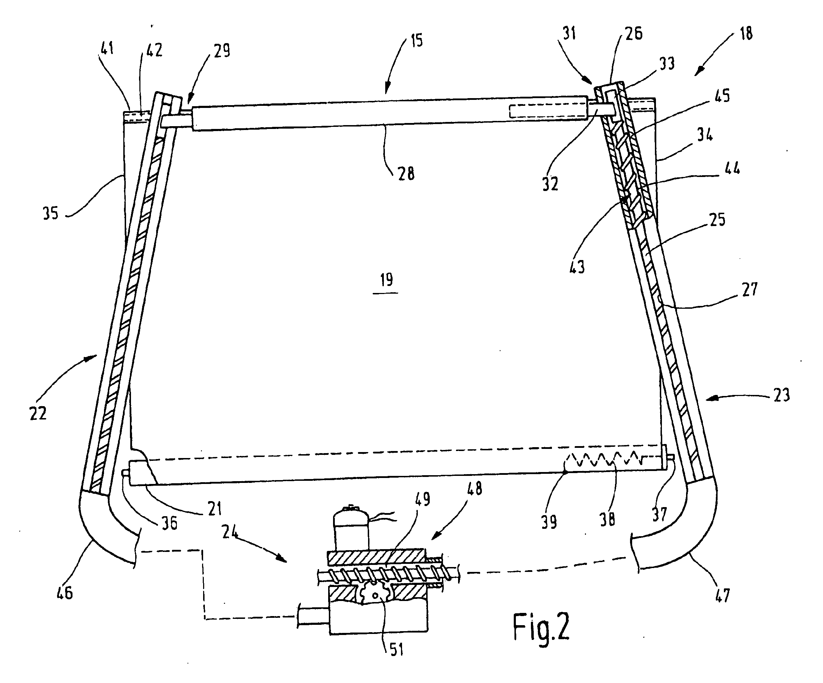

Das Auszugsprofil 15 ist Teil eines Heckscheibenrollos 18, dessen prinzipieller Aufbau in Fig. 2 dargestellt ist. Zu dem Heckscheibenrollo 18 gehören das bereits erwähnte Auszugsprofil 15, eine daran befestigte biegeschlaffe Rollobahn 19, eine Wickelwelle 21, zwei Führungsschienen 22 und 23 sowie ein Getriebemotor 24.

Die Führungsschienen 22, 23 sind hinter der betreffenden Innenverkleidung 16 in der Nähe des Schlitzes 17 anordnet und folgen bei der konkreten Ausführung dessen Verlauf. In Fig. 2 sind sie der Einfachheit und Übersichtlichkeit halber gerade veranschaulicht. Wesentlich ist zu beachten, dass die Führungsschienen 22, 23 in der Projektion auf die Zeichenebene entsprechend den aufeinander zu konvergierenden Seitenkanten 8 des Heckfensters 5 von unten nach oben ebenfalls aufeinander zu laufen, so dass der Abstand im unteren Bereich, also dort wo sie aus der Hutablage 12 vortreten, größer ist als im Bereich der Oberkante 6 des Heckfensters 5.

Die beiden Führungsschienen 22 und 23 haben den selben Aufbau. Es genügt damit, die Gestaltung anhand der Führungsschiene 23 im Einzelnen zu erläutern.

Die Führungsschiene 23 enthält eine Führungsnut 25, deren Querschnitt sich aus einer Nutenkammer 26 und einem Nutenschlitz 27 zusammensetzt. Der Nutenschlitz 27 zeigt eine geringere Weite als die Nutenkammer 26, die einen Kreisquerschnitt aufweist.

Der Nutenschlitz 25 öffnet sich in Richtung auf das Heckfenster 5. Damit ist der Nutenschlitz 27 in der Zeichnung zu erkennen, da diese einen Blick aus Richtung des Heckfensters 5 veranschaulicht.

Das Auszugsprofil 15 setzt sich aus einem Mittelstück 28 mit unveränderlicher starrer Länge und zwei teleskopisch verschiebbaren Endstücken 29 und 31 zusammen. Da die beiden Endstücke 29 und 31 zueinander spiegelbildlich sind, genügt es wiederum, lediglich eines im Einzelnen zu erläutern. Die Beschreibung gilt sinngemäß auch für das andere Endstück 29.

Zu dem Endstück 31 gehört eine als Flachkant ausgeführte Stange 32, die in einem nicht weiter dargestellten Aufnahmeraum innerhalb des Mittelstücks 28 längsverschieblich und unverdrehbar geführt ist. Um dies zu versinnbildlichen, ist der Verlauf der Stange 32 im Inneren des Mittelstückes 28 gestrichelt gezeigt. Zweckmäßigerweise ist der Raum als durchgehender Kanal ausgeführt und nimmt an dem anderen Ende des Mittelstücks 28 das dort vorhandene Endstück 29 ebenfalls längsverschieblich auf.

Die Stange 32 ist an ihrem freien aus dem Mittelstück 28 herausstehenden Ende, bezogen auf die Zeichenebene nach unten in Richtung auf den Schlitz 27 abgewinkelt und führt durch den Schlitz 27 in die Führungsnut 25 hinein. Innerhalb der Führungsnut 25 ist an der Stange 32 ein Gleitstück 33 befestigt. Das Gleitstück 33 weist eine Gestalt auf, die mit dem Querschnitt der Führungskammer 26 zusammenpasst. Die Dicke der Stange 32 ist so bemessen, dass sie klemmfrei in dem Führungsschlitz 27 laufen kann.

Die Rollobahn 19 ist rechteckig zugeschnitten und wird von zwei Seitenkanten 34 und 35 seitlich begrenzt. Die Breite der Rollobahn 19 ist mindestens so breit, wie der Abstand, den die beiden Innenverkleidungsteile 16 an den C-Säulen auf der Höhe des Schlitzes in der Hutablage 12 voneinander haben. Damit ist die Breite größer als der Abstand, den die Seitenverkleidungsteile 16 an den C-Säulen 3 unterhab der Oberkante 6 des Heckfensters 5 voneinander aufweisen. In Figur 2 wird dies dadurch veranschaulicht, dass im unteren Bereich der Abstand der beiden Führungsschienen 22, 23 etwas größer ist, als die Breite der Rollobahn 19, während im oberen Bereich der Abstand der Führungsschienen 22, 23 kleiner ist als die Breite der Rollobahn 19. Mit anderen Worten, die beiden Führungsschienen 22, 23 schneiden die Seitenkanten 34, 35 der darunter, oder bezogen auf die Fahrzeuggeometrie davor liegenden Rollobahn 19.

Am unteren Ende ist die Rollobahn 19 in bekannter Weise an der Wickelwelle 21 befestigt, die mittels Zapfen 36 und 37 unterhalb der Hutablage 12 in dem Kraftfahrzeug 1 drehbar gelagert ist. Der Zapfen 37 dient dabei gleichzeitig der drehfesten Verankerung eines Federmotors 38, der im Inneren der Wickelwelle 21 angeordnet ist und dessen inneres Ende bei 39 mit der Wickelwelle 21 drehfest verbunden ist. Mit Hilfe des Federmotors 38 wird die Wickelwelle 21 im Sinne des Aufwickelns der Rollobahn 19 auf die Wickelwelle 21 vorgespannt.

Die von der Wickelwelle 21 abliegende Kante der Rollobahn 19 ist mit einem über die Länge durchlaufenden Umbug 41 versehen, der auch zur schlauchförmigen Schlaufe geschlossen sein kann. In diesem Umbug 41, oder Schlaufe, liegt eine Blattfeder 42, die sich von der Seitenkante 34 bis zur Seitenkante 35 erstreckt. Die Blattfeder 42 sorgt dafür, dass diese Kante der Rollobahn 19 in Richtung parallel zur Zeichenebene und damit der Bewegungsrichtung beim Ein- und Ausfahren weitgehend steif ist, während sie in Richtung senkrecht zur Zeichenebene und damit senkrecht zu der von der ausgezogenen Rollobahn 19 aufgespannten Fläche, verhältnismäßig weich flexibel ist.

Mit dem Umbug 21 und der darin liegenden Blattfeder 42 ist die Rollobahn 19 in dem Mittelstück 15 verankert. Hierzu enthält das Mittelstück einen in Richtung auf die Rollobahn 19 zu offenen Schlitz, in den die Rollobahn 19 mit dem Umbug 41 beispielsweise eingeklebt ist.

Der Kanal für die Endstücke 29 und 31 ist, bezogen auf die wahren Einbauverhältnisse, dem Heckfenster 5 näher benachbart als der Aufnahmeschlitz für den Umbug 41. Von der Seite gesehen verlaufen die Führungsschienen 22, 23 zwischen den Stangen 32 und dem Umbug 41.

Mit Hilfe der Blattfeder 42 wird die in das Mittelstück 28 eingeleitete Vorschubbewegung beim Ausfahren der Rollobahn 19 auch auf jene Seitenbereiche der Rollobahn 19 übertragen, die nicht mit dem Mittelstück 28 verbunden sind. Hierdurch wird unter anderem auch ein Faltenwurf in der an sich biegeschlaffen Rollobahn 19 verhindert. Letztere besteht in der üblichen Weise aus gelochter Folie oder Kettengewirke oder einem anderen für Rollobahnen geeigneten weitgehend biegeschlaffen Grundmaterial.

Um die Rollobahn 19 vor dem Heckfenster 5 aufspannen zu können, läuft in jeder Führungskammer 26 der beiden Führungsschienen 22, 23 ein biegeelastisches lineares Schubglied 43. Das Schubglied 43 setzt sich aus einer im Querschnitt kreisförmigen Seele 44 und einer auf der Seele 44 an der Außenseite verlaufenden Wendel 45 zusammen. Die Wendel 45 bildet auf der Außenseite der Seele 44 eine über die Länge durchlaufende Rundumverzahnung. Mit anderen Worten, das Schubglied 43 ist eine biegsame rundum verzahnte Zahnstange. Das Schubglied 43 stößt an jeder Seite gegen die benachbarte Stirnseite des Gleitstücks 33.

Die beiden Schubglieder 43 werden über den Getriebemotor 24 bewegt, weshalb von dem unteren Ende jeder Führungsschiene 22, 23 ein Führungsrohr 46, 47 zu dem Getriebemotor 24 führt. Er umfasst ein Getriebegehäuse 48, durch das zwei Bohrungen 49 hindurchführen, von denen wegen der nur teilweise aufgebrochenen Darstellung lediglich eins zu erkennen ist. Diese Bohrungen 49 laufen tangential an einem Ausgangszahnrad 51 vorbei, das in die Verzahnung des Schubgliedes eingreift. In dem gezeigten Fall in die Verzahnung des Schubglieds 43 der Führungsschiene 23.

Da die beiden Schubglieder an diametral gegenüberliegenden Seiten mit dem selben Ausgangszahnrad 51 kämmen, werden sie in entgegengesetzte Richtung jeweils um gleiche Beträge bewegt, wenn das Ausgangszahnrad 51 gedreht wird. Der nicht benötigte Teil jedes Schubglieds 43 läuft in ein nicht weiter gezeigtes Speicherrohr.

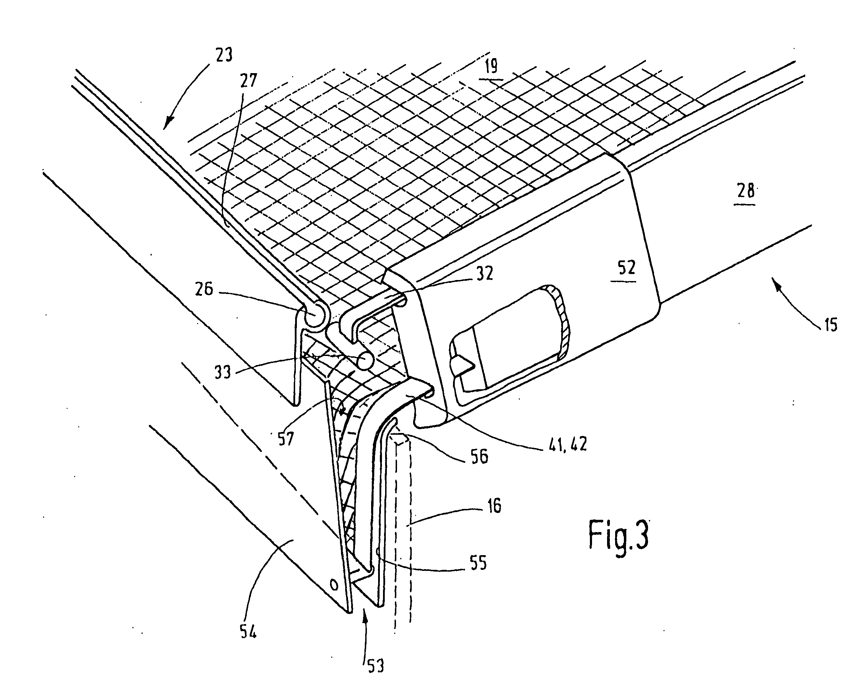

Fig. 3 zeigt, wie die über das Mittelstück 28 des Auszugsprofils 15 überstehenden seitlichen Bereiche der Rollobahn 19 verstaut werden, wenn die Rollobahn 19 in der Nähe des oberen Endes der beiden Führungsschienen 22, 23 steht.

Auf der anderen Seite der Rollobahn 19 befindet sich eine spiegelbildliche Anordnung aus Führungsschiene und Aufnahmeraum.

Außerdem ist in der vergrößerten Darstellung zu erkennen, dass die Endstücke 29, 31 zusätzlich durch Kappen 52 verblendet sind, die mit den Stangen 32 verbunden sind, um eine ästhetisch ansprechende Fortsetzung der Gestalt des Mittelstücks 28 zu erreichen.

Zwischen der Innenverkleidung 16 und der Roh-Karosserie, die in Figur 3 nicht gezeigt ist, befindet sich ein spaltförmiger Aufnahmeraum 53. Der Aufnahmeraum 53 ist, genauso wie die Führungsschiene 23, durch den Schlitz 17 hindurch zugänglich. Er liegt mit seiner Flachseite parallel zu der durch die Innenverkleidung 16 definierten Fläche, und damit im wesentlichen auch parallel zu der Seitenwand des Kraftfahrzeugs 1.

Der Aufnahmeraum 53 wird durch zwei miteinander verbundene streifenförmige Platten 54 und 55 begrenzt. Die Platte 54 reicht wie gezeigt bis unmittelbar in die Nähe der Führungsschiene 23, während die Platte 55 in Richtung auf die Führungsschiene 23 eine geringere Höhe hat. Sie endet an einer sanft gekrümmten Umlenkkante 56. Dadurch entsteht zwischen der Umlenkkante 56 und der Platte 54 ein Einlaufschlitz 57, der sich in Richtung auf die Unterseite der Führungsschiene 23 und in Richtung durch den Schlitz 17 hindurch d.h. schräg nach oben öffnet. Die Platte 54 ist auf ihrer der Rollobahn 19 zugekehrten Seite glatt und dient in der nachfolgend beschriebenen Weise als Gleitfläche.

Im eingefahrenen Zustand des Heckscheibenrollos 18 ist die Rollobahn 19 nahezu vollständig auf die Wickelwelle 21 aufgewickelt, soweit bis, wie Fig. 1 zeigt, das Auszugsprofil 15 auf der Hutablage 12 aufliegt. Da in diesem Zustand neben der Hutablage ausreichend Platz ist, steht die Rollobahn 19 mit ihrem Umbug 41 dort bis in die miteinander korrespondierenden Schlitze 17 hinein. Soweit sie sich bis unter die Hutablage 12 erstrecken.

Da auf jeder Seite der spaltförmige Aufnahmeraum 53 dem Verlauf der Seitenkante 8 des Heckfensters 5 folgt und über die gesamte Länge nach Außen über die betreffende Seitenkante 8 hinaus zur Außenhaut der Karosserie versetzt ist, wird keinerlei Zwang auf die Rollobahn 19 im Bereich des Umbugs 41 ausgeübt. Die Schubglieder 43 sind zurückgezogen, beziehungsweise nur soweit vorgeschoben, dass sie in dieser Betriebsstellung gerade eben an den Gleitstücken 33 anliegen.

Wenn der Benutzer ausgehend von dieser eingefahrenen Stellung das Heckfenster 5 abschatten möchte, setzt er durch Betätigung des entsprechenden Schalters den Getriebemotor 48 in Gang. Das Ausgangszahnrad 51 rotiert bezogen auf das gezeigte Ausführungsbeispiel im Uhrzeigersinne und schiebt die beiden Schubglieder 43 in Richtung auf die zugehörige Führungsschiene 22, 23 vor. Die beiden Schubglieder 43 drücken dabei die Gleitstücke 33 vor sich her und bewegen so das Auszugsprofil 15 von der Hutablage 12 in Richtung auf die Fensteroberkante 6. Da die beiden Führungsschienen 22, 23 aufeinander zu konvergieren, werden die Endstücke 29, 31 teleskopartig in das Mittelstück 28 hineingeschoben.

Gleichzeitig während dieser Bewegung wird der Abstand, den die Gleitflächen der Platten 54 der beiden Aufnahmeräume 53 voneinander haben, aus der Sicht der Rollobahn fortschreitend kleiner. Die Enden des Umbugs 41 beziehungsweise die Seitenkanten 34, 35 werden folglich immer tiefer in die Einlaufschlitze 57 der beiden seitliche verlaufenden Aufnahmeräume 53 eindringen. Irgendwann im Verlauf der Bewegung werden sie gegen die dem Auszugsprofil 15, beziehungsweise der Innenverkleidung 16 zugekehrte Flachseite der Platte 54 anstoßen. Durch entsprechende Ausrichtung der Gleitfläche gegenüber der Längsachse des Auszugsprofils 15 werden die Enden der in dem Umbug 41 enthaltenen Blattfeder 42 bezogen auf Fig. 3 nach unten gedrängt. Die dem Fahrgastraum zugekehrte Seite der Rollobahn 19 wird sich auf der Umlenkkante 46 auflegen.

Bei weiter fortgesetzter Bewegung gleitet die Blattfeder mit ihrem freien Ende an der betreffenden Seite, wie Fig. 3 zeigt, zunehmend tiefer in den benachbarten Aufnahmeraum 53. Aufgrund der Rücksprungkraft liegt sie einerseits an der Umlenkkante 56 und andererseits an der Platte 54 an.

Auf diese Weise nimmt der Aufnahmeraum 53, der an jeder Seite der Rollobahn 19 vorhanden ist, jenen etwa dreieckförmigen Bereich der Rollobahn 19 auf, der ausgehend von der eingefahrenen Stellung während des Ausbreitens der Rollobahn zunehmend über den Schlitz 17 in der Innenverkleidung 16 nach außen überstehen würde. Diese dreieckförmigen Bereiche sind, bezogen auf die Fahrzeuggeometrie, hinter der Innenverkleidung 16 nach vorne geklappt.

Aufgrund dieser Anordnung erstreckt sich in jeder Ausfahrposition des Heckscheibenrollos 18 die Rollobahn ohne sichtbaren Lichtspalt von Innenverkleidung 16 zu Innenverkleidung 16 auf der gegenüberliegenden Seite. Sie tritt ohne Lichtspalt aus der Innenverkleidung 16 aus und verschwindet auf der gegenüberliegenden Seite ebenfalls ohne Lichtspalt in dem dort vorhandenen Schlitz 17.

Damit die Umklappbewegung der Blattfeder 42 nicht behindert wird und die Blattfeder anstatt umzubiegen gestaucht werden würde, verläuft die Platte 54 mit ihrer dem Auszugsprofil 15 zugekehrten Gleitfläche unter einem entsprechenden von 90° abweichenden Winkel gegenüber der Ebene der Rollobahn 19. Dadurch wird der Blattfeder 42 eine entsprechende Vorzugsbiegerichtung aufgeprägt.

Das Einfahren des Heckscheibenrollos 18 geschieht in der umgekehrten Reihenfolge, indem die beiden Schubglieder 43 mit Hilfe es Getriebemotors 24 aus den Führungsschienen 22, 23 zurückgezogen werden. Das Auszugsprofil 15 wird dann entweder ausschließlich durch den Federmotor 38 zurückbewegt oder durch die Schubglieder 43, die dann als Zugglieder wirken und beispielsweise formschlüssig mit den Gleitstücken 33 verbunden sind. Während der Rückzugsbewegung verbreitert sich aus der Sicht der Rollobahn 19 kontinuierlich der Abstand zwischen den Aufnahmeräumen 53, so dass die Blattfeder 42 entsprechend über die Umlenkkante 56 herausgezogen wird.

Die Blattfeder 42 stellt, wie bereits eingangs ausgeführt ist sicher, dass die Rollobahn 19 über die gesamte Breite und nicht nur im Bereich des Mittelstücks 15 angetrieben ist. Sie ist somit auch in jenem Bereich angetrieben, der sich im ausgefahrenen Zustand in dem betreffenden Aufnahmeraum 53 befindet.

Die Erfindung ist in den Figuren anhand einer Geometrie eines Kraftfahrzeugs gezeigt worden, bei der das Heckfenster in Richtung auf das Dach schmäler wird. Das erfinderische Konzept kann auch bei Heckfenstern angewendet werden, deren Annäherung praktisch rechteckig ist, so dass in jeder Stellung der Rollobahn 19 die Blattfeder immer abgebogen in den zugehörigen Aufnahmeraum 53 hineinragt und zwar sowohl in einer Position in der Nähe der Wickelwelle als auch in einer Position, die der voll ausgefahrenen Stellung entspricht.

Ein Kraftfahrzeugrollo für Heckfenster weist eine Rollobahn auf, deren Breite größer ist, als es der lichten Weite zwischen den Innenverkleidungsteilen am Heckfenster entspricht. Der überstehende Teil der Rollobahn wird in schlitzförmigen Aufnahmeräumen oder Taschen aufgenommen, die sich zwischen der Roh-Karosserie und der Innenseite der Innenverkleidung befinden. Dadurch wird jeglicher Lichtspalt zwischen der Innenverkleidung und einer Seitenkante der Rollobahn vermieden, da die Seitenkante der Rollobahn ständig hinter der Innenverkleidung gehalten ist.

## Patentansprüche

1. Rolloanordnung (18) für Kraftfahrzeugfenster (5) insbesondere Heckfenster,
mit einer drehbar gelagerten Rollowelle (21), die neben einer Kante (7) des Kraftfahrzeugfensters (5) angeordnet ist,
mit einem Auszugsprofil (15),
mit zwei neben anderen Kanten (8) des Kraftfahrzeugfensters (5) verlaufenden Führungsschienen (22,23), in denen das Auszugsprofil (15) endseitig geführt ist,
mit einer Rollobahn (19), die mit einer Kante an der Wickelwelle (21) befestigt ist, die mit einer weiteren Kante (41), die zu der Wickelwelle (21) im wesentlichen parallel verläuft an dem Auszugsprofil (15) verankert ist, und deren Breite, gemessen parallel zu der Wickelwelle (21), zumindest neben dem Auszugsprofil (15) größer ist als der Abstand der Führungsschienen (23) voneinander an einer Stelle, die dem vollständigen Auszug der Rollobahn (19) vor dem Kraftfahrzeugfenster (5) entspricht, derart, dass die Rollobahn (19) seitlich über das Auszugsprofil (15) übersteht.

2. Rolloanordnung nach Anspruch 1, **dadurch gekennzeichnet, dass** neben jeder Führungsschiene (22,23) ein Aufnahmeraum (53) vorgesehen ist, der einen über die Fensterbreite und/oder die Führungsschienen (22,23) überstehenden Teil der Rollobahn (19) aufnimmt und der einen Zugangsschlitz (57) aufweist.

3. Rolloanordnung nach Anspruch 1, **dadurch gekennzeichnet, dass** neben jeder Führungsschiene (22,23) ein Aufnahmeraum (53) vorgesehen ist, der den beim Vorschub der Rollobahn (19) zunehmend über die Fensterbreite und/oder die Führungsschiene (22,23) seitlich überstehenden Teil der Rollobahn (19) aufnimmt und der einen Zugangsschlitz (57) aufweist.

4. Rolloanordnung nach Anspruch 2 oder 3, **dadurch gekennzeichnet, dass** der Zugangsschlitz (57) unterhalb der benachbarten Führungsschiene (22,23) verläuft.

5. Rolloanordnung nach Anspruch 1, **dadurch gekennzeichnet, dass** der Aufnahmeraum (53) eine veränderliche Tiefe aufweist, die bei der Wickelwelle (21) am geringsten und am von der Wickelwelle (21) abliegenden Ende am größten ist.

6. Rolloanordnung nach Anspruch 1, **dadurch gekennzeichnet, dass** der Aufnahmeraum (53) eine Umlenkkante (56) und eine von der Umlenkkante (56) abliegende Begrenzungsfläche (54) aufweist.

7. Rolloanordnung nach Anspruch 6, **dadurch gekennzeichnet, dass** die Begrenzungsfläche (54) etwa parallel zu einer benachbarten Seitenwand (3) des Kraftfahrzeugs (1) verläuft.

8. Rolloanordnung nach Anspruch 1, **dadurch gekennzeichnet, dass** die Rollobahn (19) rechteckig zugeschnitten ist.

9. Rolloanordnung nach Anspruch 1, **dadurch gekennzeichnet, dass** die Breite der Rollobahn (19) an jeder Stelle mindestens so groß ist wie die Wickelwelle (21) lang ist.

10. Rolloanordnung nach Anspruch 1, **dadurch gekennzeichnet, dass** die Rollobahn (19) an jener Kante (41), die mit dem Auszugsprofil (15) verbunden ist, ausgesteift ist, derart, dass die Kante (41) in Richtung parallel zu der aufgespannten Rollobahnfläche steif und in Richtung quer dazu biegeelastisch ist.

11. Rolloanordnung nach Anspruch 1, **dadurch gekennzeichnet, dass** die Rollobahn (19) an jener Kante, die mit dem Auszugsprofil (15) verbunden ist, mit einem Umbug (41) versehen oder zu einer schlauchförmigen Schlaufe geformt ist, die vorzugsweise über die Länge der Kante durch geht.

12. Rolloanordnung nach Anspruch 11, **dadurch gekennzeichnet, dass** in dem Umbug (41) /der Schlaufe, zumindest in den Endbereichen, ein Blattfederstück (42) steckt, dessen Flachseite parallel zu der von der ausgezogenen Rollobahn (19) definierten Fläche liegt.

13. Rolloanordnung nach Anspruch 12, **dadurch gekennzeichnet, dass** die Länge der Blattfeder (42) größer ist als es dem Überstand der Rollobahn (19) über das Mittelstück (28) des Auszugsprofils (15) entspricht, vorzugsweise über die Länge der Kante der Rollobahn (19) durchläuft.

14. Rolloanordnung nach Anspruch 1, **dadurch gekennzeichnet, dass** der Rollowelle (21) eine Antriebseinrichtung (38) zugeordnet ist, durch die die Rollowelle (21) im Sinne des Aufwickelns der Rollobahn (19) in Bewegung zu setzen ist.

15. Rolloanordnung nach Anspruch 14, **dadurch gekennzeichnet, dass** die Antriebseinrichtung (38) für die Rollowelle (21) von einem Federmotor gebildet ist.

16. Rolloanordnung nach Anspruch 1, **dadurch gekennzeichnet, dass** das Auszugsprofil (15) sich aus einem in der Länge unveränderlichen Mittelstück (28) und zwei Endstücken (29,31) zusammensetzt, die gegenüber dem Mittelstück (28) in Längsrichtung des Auszugsprofils (28) beweglich und in den Führungsschienen (22,23) geführt sind.

17. Rolloanordnung nach Anspruch 1, **dadurch gekennzeichnet, dass** die Führungsschienen (22,23) in der Nähe der Wickelwelle (21) einen größeren Abstand voneinander haben als an jener Stelle, die dem voll ausgezogenen Rollo (18) entsprechen.

18. Rolloanordnung nach Anspruch 1, **dadurch gekennzeichnet, dass** jede Führungsschiene (22,23) eine Führungsnut (25) enthält, deren Querschnitt sich aus einer Nutenkammer (26) und einem Nutenschlitz (27) zusammensetzt, wobei die Weite des Nutenschlitzes (27) kleiner ist als die Weite der Nutenkammer (26), gemessen parallel zu der Weite des Nutenschlitzes (27).

19. Rolloanordnung nach Anspruch 18, **dadurch gekennzeichnet, dass** die Nutenkammer (26) einen Kreisquerschnitt aufweist.

20. Rolloanordnung nach Anspruch 18, **dadurch gekennzeichnet, dass** das Auszugsprofil (15) mit Gleitstücken (33) versehen ist, die an den Querschnitt der Nutenkammer (26) angepasst sind.

21. Rolloanordnung nach Anspruch 18, **dadurch gekennzeichnet, dass** in den Nutenkammern (26) linienförmige Antriebsglieder (43) geführt sind.

22. Rolloanordnung nach Anspruch 21, **dadurch gekennzeichnet, dass** die Antriebsglieder (43) über einen Getriebemotor (48) in Gang gesetzt werden.

23. Rolloanordnung nach Anspruch 1, **dadurch gekennzeichnet, dass** die Führungsschienen (22,23) an Innenverkleidungsteilen (16) des Kraftfahrzeuges (1) befestigt oder in diesen versenkt angeordnet sind.

## Claims

1. Roller blind arrangement (18) for motor vehicle windows (5), in particular rear windows,
with a rotatably mounted roller blind shaft (21), which is arranged next to an edge (7) of the motor vehicle window (5),
with a pull-out profile (15),
with two guide rails (22, 23), which run next to other edges (8) of the motor vehicle window (5) and in which the pull-out profile (15) is guided at the ends,
with a roller blind sheet (19), which is fastened at one edge to the winding shaft (21) and at a further edge (41), which runs substantially parallel to the winding shaft (21), is anchored to the pull-out profile (15), and the width of which, measured parallel to the winding shaft (21), at least adjacent to the pull-out profile (15) is larger than the spacing of the guide rails (23) from one another at a location corresponding to the complete extension of the roller blind sheet (19) in front of the motor vehicle window (5) such that the roller blind sheet (19) protrudes laterally over the pull-out profile (15).

2. Roller blind arrangement according to claim 1, **characterised in that** a receiving space (53), which receives a part of the roller blind sheet (19) protruding over the window width and/or the guide rails (22, 23) and which has an access slot (57), is provided adjacent to each guide rail (22, 23).

3. Roller blind arrangement according to claim 1, **characterised in that** a receiving space (53), which receives the part of the roller blind sheet (19) that protrudes laterally over the window width and/or the guide rails (22, 23) increasingly as the roller blind sheet (19) advances and which has an access slot (57), is provided adjacent to each guide rail (22, 23).

4. Roller blind arrangement according to claim 2 or 3, **characterised in that** the access slot (57) runs below the adjacent guide rail (22, 23).

5. Roller blind arrangement according to claim 1, **characterised in that** the receiving space (53) has a variable depth, which is at its smallest near the winding shaft (21) and at its greatest at the end remote from the winding shaft (21).

6. Roller blind arrangement according to claim 1, **characterised in that** the receiving space (53) has a deflection edge (56) and a boundary surface (54) remote from the deflection edge (56).

7. Roller blind arrangement according to claim 6, **characterised in that** the boundary surface (54) runs approximately parallel to an adjacent side wall (3) of the motor vehicle (1).

8. Roller blind arrangement according to claim 1, **characterised in that** the blind sheet (19) is cut to a rectangular shape.

9. Roller blind arrangement according to claim 1, **characterised in that** the width of the roller blind sheet (19) at every location is at least as large as the winding shaft (21) is long.

10. Roller blind arrangement according to claim 1, **characterised in that** at the edge (41) joined to the pull-out profile (15) the roller blind sheet (19) is reinforced in such a manner that the edge (41) is rigid in a direction parallel to the opened-out blind sheet surface and is pliant in a direction transverse thereto.

11. Roller blind arrangement according to claim 1, **characterised in that** at the edge (41) joined to the pull-out profile (15) the roller blind sheet (19) is provided with a fold (41) or is shaped into a tube-like loop, which preferably extends over the length of the edge.

12. Roller blind arrangement according to claim 11, **characterised in that** a leaf spring piece (42), the flat side of which lies parallel to the surface defined by the extended rolled blind sheet (19), sits in the fold (41) / loop, at least in the end regions.

13. Roller blind arrangement according to claim 12, **characterised in that** the length of the leaf spring (42) is greater than the distance the roller blind sheet (19) protrudes over the central piece (28) of the pull-out profile (15).

14. Roller blind arrangement according to claim 1, **characterised in that** the roller blind shaft (21) has an associated drive means (38), by means of which the roller blind shaft (21) is set in motion in the sense of winding up the roller blind sheet (19).

15. Roller blind arrangement according to claim 14, **characterised in that** the drive means (3 8) for the roller blind shaft (21) is formed by a spring motor.

16. Roller blind arrangement according to claim 1, **characterised in that** the pull-out profile (15) is composed of a central piece (28) that is not variable in length and two end pieces (29, 31), which are disposed to be movable in the longitudinal direction in relation to the central piece (28) and in the guide rails (22, 23).

17. Roller blind arrangement according to claim 1, **characterised in that** in the guide rails (22, 23) are arranged at a greater distance from one another in the vicinity of the winding shaft (21) than at the location corresponding to the fully extended roller blind (18).

18. Roller blind arrangement according to claim 1, **characterised in that** each guide rail (22, 23) contains a guide groove (25), the cross-section of which is composed of a groove chamber (26) and a groove slot (27), wherein the width of the groove slot (27) is smaller than the width of the groove chamber (26), measured parallel to the width of the groove slot (27).

19. Roller blind arrangement according to claim 18, **characterised in that** the groove chamber (26) has a circular cross-section.

20. Roller blind arrangement according to claim 19, **characterised in that** the pull-out profile (15) is provided with slide pieces (33), which are matched to the cross-section of the groove chamber (26).

21. Roller blind arrangement according to claim 18, **characterised in that** linear drive elements (43) are guided in the groove chambers (26).

22. Roller blind arrangement according to claim 21, **characterised in that** the drive elements (43) are set in operation by means of a geared motor (48).

23. Roller blind arrangement according to claim 1, **characterised in that** the guide rails (22, 23) are fastened to inside lining parts (16) of the motor vehicle (1) or are sunken flush therein.

## Revendications

1. Dispositif de store (18) pour vitres de véhicules automobiles (5), en particulier vitres arrière, comprenant un arbre de store (21) monté tournant et disposé près d'un bord (7) de la vitre de véhicule automobile (5), comprenant un profilé d'extension (15), comprenant deux rails de guidage (22, 23) qui s'étendent près d'autres bords (8) de la vitre de véhicule automobile (5) et dans lesquels le profilé d'extension (15) est guidé à ses extrémités, comprenant une bande de store (19) qui est fixée à l'arbre enrouleur (21) par un bord, qui est ancrée sur le profilé d'extension (15) par un autre bord (41) sensiblement parallèle à l'arbre enrouleur (21), et dont la largeur mesurée parallèlement à l'arbre enrouleur (21) est supérieure, au moins près du profilé d'extension (15), à la distance mutuelle des rails de guidage (23) à un endroit qui correspond à l'extension complète de la bande de store (19) devant la vitre de véhicule automobile (5), de sorte que la bande de store (19) dépasse latéralement du profilé d'extension (15).

2. Dispositif de store selon la revendication 1, **caractérisé en ce qu'**à côté de chaque rail de guidage (22, 23) est prévu un espace de réception (53) qui reçoit une partie de la bande de store (19) dépassant de la largeur de vitre et/ou des rails de guidage (22, 23) et qui est pourvu d'une fente d'accès (57).

3. Dispositif de store selon la revendication 1, **caractérisé en ce qu'**à côté de chaque rail de guidage (22, 23) est prévu un espace de réception (53) qui reçoit la partie de la bande de store (19) qui dépasse de manière croissante latéralement de la largeur de vitre et/ou des rails de guidage (22, 23) lors de l'avance de la bande de store (19) et qui est pourvu d'une fente d'accès (57).

4. Dispositif de store selon la revendication 2 ou 3, **caractérisé en ce que** la fente d'accès (57) s'étend sous le rail de guidage (22, 23) adjacent.

5. Dispositif de store selon la revendication 1, **caractérisé en ce que** l'espace de réception (53) présente une profondeur variable qui est minimale du côté de l'arbre enrouleur (21) et maximale à l'extrémité éloignée de l'arbre enrouleur (21).

6. Dispositif de store selon la revendication 1, **caractérisé en ce que** l'espace de réception (53) présente un bord de déviation (56) et une surface de délimitation (54) éloignée du bord de déviation (56).

7. Dispositif de store selon la revendication 6, **caractérisé en ce que** la surface de délimitation (54) s'étend sensiblement parallèlement à un panneau latéral (3) adjacent du véhicule automobile (1).

8. Dispositif de store selon la revendication 1, **caractérisé en ce que** la bande de store (19) est taillée en rectangle.

9. Dispositif de store selon la revendication 1, **caractérisé en ce qu'**en tout endroit la largeur de la bande de store (19) est au moins égale à la longueur de l'arbre enrouleur (21).

10. Dispositif de store selon la revendication 1, **caractérisé en ce qu'**au niveau du bord (41) relié au profilé d'extension (15) la bande de store (19) est rigidifiée de façon que le bord (41) soit rigide dans la direction parallèle à la surface de bande de store déployée et soit élastique en flexion dans la direction transversale à celle-ci.

11. Dispositif de store selon la revendication 1, **caractérisé en ce qu'**au niveau du bord relié au profilé d'extension (15) la bande de store (19) est pourvue d'un ourlet (41) ou conformée en boucle tubulaire qui s'étend de préférence sur toute la longueur du bord.

12. Dispositif de store selon la revendication 11, **caractérisé en ce que** dans l'ourlet (41) / la boucle, au moins dans les zones d'extrémité, se trouve un élément de ressort à lame (42) dont le côté plat est parallèle à la surface définie par la bande de store (19) déployée.

13. Dispositif de store selon la revendication 12, **caractérisé en ce que** la longueur du ressort à lame (42) est supérieure à la valeur de dépassement de la bande de store (19) au-delà de la pièce centrale (28) du profilé d'extension (15), de préférence s'étend sur la longueur du bord de la bande de store (19).

14. Dispositif de store selon la revendication 1, **caractérisé en ce qu'**à l'arbre de store (21) est associé un dispositif d'entraînement (38) qui permet de mettre en mouvement l'arbre de store (21) dans le but d'enrouler la bande de store (19).

15. Dispositif de store selon la revendication 14, **caractérisé en ce que** le dispositif d'entraînement (38) pour l'arbre de store (21) est formé par un moteur à ressort.

16. Dispositif de store selon la revendication 1, **caractérisé en ce que** le profilé d'extension (15) se compose d'une pièce centrale (28) de longueur invariable et de deux pièces d'extrémité (29, 31) qui sont mobiles par rapport à la pièce centrale (28) en direction longitudinale du profilé d'extension (28) et sont guidées dans les rails de guidage (22, 23).

17. Dispositif de store selon la revendication 1, **caractérisé en ce que** les rails de guidage (22, 23) ont entre eux une distance plus grande à proximité de l'arbre enrouleur (21) qu'à l'endroit qui correspond au store (18) complètement déployé.

18. Dispositif de store selon la revendication 1, **caractérisé en ce que** chaque rail de guidage (22, 23) comporte une rainure de guidage (25) dont la section se compose d'une chambre de rainure (26) et une fente de rainure (27), la largeur de la fente de rainure (27) étant inférieure à la largeur de la chambre de rainure (26), mesurée parallèlement à la largeur de la fente de rainure (27).

19. Dispositif de store selon la revendication 18, **caractérisé en ce que** la chambre de rainure (26) présente une section circulaire.

20. Dispositif de store selon la revendication 18, **caractérisé en ce que** le profilé d'extension (15) est pourvu de coulisseaux (33) qui sont adaptés à la section de la chambre de rainure (26).

21. Dispositif de store selon la revendication 18, **caractérisé en ce que** des éléments d'entraînement linéaires (43) sont guidés dans les chambres de rainure (26).

22. Dispositif de store selon la revendication 21, **caractérisé en ce que** les éléments d'entraînement (43) sont mis en mouvement par un motoréducteur (48).

23. Dispositif de store selon la revendication 1, **caractérisé en ce que** les rails de guidage (22, 23) sont fixés à des éléments de garniture intérieure (16) du véhicule automobile (1) ou sont disposés en renfoncement dans ceux-ci.
